# EUROPEAN PATENT SPECIFICATION

(11) **EP 1 386 656 B1**
(45) Date of publication and mention of the grant of the patent: **21.01.2009**
(21) Application number: 02017245.8
(22) Date of filing: 31.07.2002
(51) Int. Cl.: B01D 53/94, F01N 3/18

(54) **Process for regenerating a nitrogen oxides storage catalyst**
Verfahren zur Regenerierung eines Stickoxid-Speicherkatalysators
Procédé permettant la régénération d'un catalyseur d'accumulation des oxydes d'azote

(43) Date of publication of application: 04.02.2004
(73) Proprietor: Umicore AG & Co. KG, 63457 Hanau-Wolfgang (DE)
(72) Inventor: Rohr, Friedemann, Dr., 63457 Hanau (DE); Kattwinkel, Peter, 51709 Marienheide (DE); Peter, Stefan Dietrich, Dr., 76344 Eggenstein-Leopoldshafen (DE); Kreuzer, Thomas, Dr. ., 61184 Karben (DE); Lox, Egbert, Dr., 36355 Hochwaldhausen (DE)
(74) Representative: Vossius & Partner

(56) References cited:
- EP-A- 0 598 916
- EP-A- 1 167 711
- DE-A- 10 126 828
- DE-A- 19 801 815

## Description

### FIELD OF THE INVENTION

The present inventions relates to cleaning of the exhaust gas of a diesel engine. In particular it deals with lowering the content of nitrogen oxides contained in the exhaust gas by using a nitrogen oxides storage catalyst. The process according to the invention provides a new strategy for regenerating the nitrogen oxides storage catalyst resulting in improved nitrogen oxides conversion at low exhaust gas temperatures.

### BACKGROUND OF THE INVENTION

Diesel engines belong to the category of so-called lean-burn engines which are operated with lean air/fuel-ratios.

The air/fuel-ratio is calculated from the mass of air supplied to the engine in relation to the mass of fuel. Normal fuels for internal combustion engines such as diesel engines or gasoline engines require an air/fuel-ratio of approximately 14.6 for complete combustion, that is to say 14.6 kilograms of air are needed for the combustion of 1 kilogram of fuel. Air/fuel-ratios above that value are called lean and air/fuel ratios below said value are called rich. The exhaust gas leaving the engine exhibits the same air/fuel-ratio as the air/fuel-mixture supplied to the engine provided that no adsorption or desorption processes occur within the engine. Frequently the so-called λ-value is used to characterise the composition of the air/fuel-mixture or of the exhaust gas. The λ-value is equal to the air/fuel-ratio normalised to stoichiometric conditions. For stoichiometric combustion of the fuel the λ-value of the air/fuel mixture supplied to the engine must be equal to 1.

Diesel engines are operated with lean air/fuel-mixtures with λ-values above 1, usually with λ-values between 1.5 and 4. Therefore the exhaust gas of diesel engines contains a high concentration of oxygen between 5 and 15 vol.-% while stoichiometrically operated gasoline engines contain only around 0.7 vol.-% of oxygen.

Diesel engine exhaust gases contain harmful substances such as carbon monoxide (CO), unburnt hydrocarbons (HC), nitrogen oxides (NOx) and soot particles. The nitrogen oxides are a mixture of different oxides of nitrogen. The major component is nitrogen monoxide which amounts to 60 to 90 vol.-% of the total nitrogen oxides content of the exhaust gas, the balance being mainly nitrogen dioxide. The exact composition depends on the engine type and the current operating conditions.

Carbon monoxide and unburnt hydrocarbons can effectively be converted to harmless substances by contacting the exhaust gas with a diesel oxidation catalyst. But due to the high oxygen content of diesel exhaust gas it is difficult to convert the nitrogen oxides to harmless nitrogen gas. For coping with this problem nitrogen oxides storage catalysts have been developed which adsorb the nitrogen oxides during operating phases of the engine with lean exhaust gas and release nitrogen oxides and convert them to harmless substances during operating phases of the engine with rich exhaust gas.

A nitrogen oxides storage catalyst is composed mainly of a platinum catalyst and a storage component. The storage component comprises basic metal oxide compounds such as oxides of elements selected from the group consisting of alkali metals, alkaline earth metals, rare earth metals and mixtures thereof. The preferred storage components are barium oxide and strontium oxide. The well recognised theory about the functioning of such a catalyst is as follows:

During lean operating phases of the engine nitrogen monoxide contained in the exhaust gas is oxidised by the platinum catalyst to nitrogen dioxide which under the humid atmosphere of the exhaust gas gets trapped by the storage components in the form of nitrates. When the storage capacity of the storage components has been exhausted the nitrogen oxides storage catalyst has to be regenerated to restore its original storage capacity. For that aim the air/fuel-ratio of the air/fuel-mixture fed to the engine is changed to rich values. Under the reducing conditions established by the rich exhaust gas the adsorbed nitrogen oxides get desorbed and are converted by the platinum catalyst with the help of carbon monoxide and hydrocarbons contained in the rich exhaust gas to nitrogen, carbon dioxide and water.

Depending on the nominal storage capacity of the nitrogen oxides storage catalyst and the concentration of nitrogen oxides contained in the exhaust gas the time during which the nitrogen oxides storage catalyst can adsorb nitrogen oxides, the so-called storage phase, amounts to 1 to 5 minutes. Thereafter the catalyst has to be regenerated. Regeneration is done by lowering the λ-value of the exhaust gas to values between 0,9 and 0,95. Between 5 to 10 seconds of regeneration are needed to restore the storage capacity of the catalyst. Thus, storage and regeneration alternate frequently during operation of the engine.

By nature, diesel engines require strongly lean air fuel mixtures for stable operation. It was only with the development of new diesel engines (common rail engines and pump-injector engines) during the last years that it became possible to operate also diesel engines with rich air/fuel-mixtures for a short period of time. This development made it possible to not only use nitrogen oxides storage catalyst for exhaust gas cleaning of lean operated gasoline engines but also for diesel engines.

Changing of the air/fuel ratio from lean to rich for regenerating the nitrogen oxides storage catalyst during driving must be performed in such a way that this change does not affect the driving comfort. Experience has shown that this condition restricts the maximum permissible regeneration time to approximately 8 to 20 seconds. But this time period is sufficient to completely regenerate the nitrogen oxides storage catalyst provided the exhaust gas temperature is high enough.

As already indicated, the above described mechanism is strongly dependent on the exhaust gas temperature and the temperature of the nitrogen oxides storage catalyst. Above a certain threshold temperature which amounts to approximately 170 to 250 °C the described mechanism functions well. But below this temperature range regeneration becomes difficult.

The newly developed diesel engines exhibit relatively low average exhaust gas temperatures. This causes problems when regenerating the nitrogen oxides storage components especially after prolonged storage periods. The conventional regeneration procedure involves brief rich periods during which the stored nitrogen oxides are released and subsequently converted to nitrogen (N₂). However, at low temperatures a substantial amount of the nitrogen oxides being released leave the converter unreduced probably due to slow kinetics of the chemical reactions involved in the conversion of nitrogen oxides. Furthermore, the storage components are only partly cleared, that is, some nitrates remain in the storage material, hence lowering the storage capacity for the next storage cycle. The situation is aggravated even further since hydrocarbon and carbon monoxide breakthroughs during the rich phase are also common under these conditions. Once again, slow kinetics at the given temperatures may be the reason. Heating measures in lean atmosphere by post injection have been proved to be quite ineffective in improving the performance of nitrogen oxides storage catalysts since the temperature increase achieved by these methods drop very quickly after switching back to normal operation mode.

Therefore there is the need in the art for improving the regeneration of nitrogen oxides storage catalysts especially at low exhaust gas and catalyst temperatures.

### SUMMARY OF THE INVENTION

According to the invention two regeneration strategies for regenerating the nitrogen oxides storage catalyst are provided. A first regeneration strategy is applied when the exhaust gas temperature of the diesel engine is above a threshold value and a second strategy is applied when the exhaust gas temperature is below said threshold value. The threshold value is dependent on the formulation of the catalyst and its ageing status. Usually this value lies between 170 and 250 °C.

The first strategy is identical to the conventional regeneration of nitrogen oxides traps. For that purpose the air/fuel ratio is changed from lean to rich during a regeneration period and the adsorbed nitrogen oxides are desorbed and converted to nitrogen.

The second regeneration strategy comprises switching the air/fuel-ratio between said rich and said lean air-fuel-ratio back and forth forming a sequence of rich lean/pulses with a number of 2 to 10 rich/lean pulses.

The second regeneration strategy improves the overall performance of the exhaust gas cleaning process considerably. At temperatures below the threshold value the conventional regeneration strategy is unable to fully restore the original storage capacity of the catalyst and leads to strong emissions of carbon monoxide and hydrocarbons during the regeneration period. When the nitrogen oxides storage catalyst is operated over a prolonged period at low exhaust gas temperatures regeneration gets worse. After each regeneration the residual nitrogen oxides remaining on the catalyst increases.

It has been observed that in some instances the first regeneration strategy can be omitted. In that case the pulsed regeneration strategy is used under all operation conditions of the diesel engine even when the exhaust gas temperature is high.

### DETAILED DESCRIPTION OF THE INVENTION

The present invention provides a process for regeneration of a nitrogen oxides storage catalyst arranged in the exhaust gas system of a diesel engine wherein the exhaust gas has an exhaust gas temperature and an air/fuel-ratio. Said process comprises a first and a second regeneration strategy wherein the first regeneration strategy is applied when the exhaust gas temperature is above a threshold value and comprises changing the air/fuel ratio from a lean to a rich value during a first regeneration period and wherein the second regeneration strategy is applied when the exhaust gas temperature is below said threshold value and comprises switching the air/fuel-ratio between said lean and said rich air/fuel-ratio back and forth forming a sequence of rich/lean-pulses with a number of 2 to 10 rich/lean pulses during a second regeneration period.

The conventional procedure for the regeneration of a nitrogen oxides storage catalyst involves running the catalyst in rich atmosphere for some seconds (typically 5 to 20 s). The engine management continuously monitors the state of the storage catalyst. If the storage performance of the catalyst drops below a critical value, regeneration is initiated. The engine switches from lean conditions with λ in the range between 1.5 and 4 to a rich operation point with λ in the range from 0.98 to 0.8 without change of torque so that the driver does not recognises the start of regeneration. As mentioned above, this procedure yields poor results at low exhaust gas temperatures below a certain threshold temperature. This threshold temperature lies between 170 and 250 °C depending on the catalyst used and its ageing state.

A substantially improved removal of the nitrous species from the catalyst combined with highly efficient conversion to nitrogen at low exhaust gas temperatures is achieved by means of a pulsed regeneration procedure. The catalyst is regenerated using a sequence of rich/lean-pulses. The engine management switches the air/fuel-ratio supplied to the engine back and forth between the normal lean operating point and a corresponding torque-neutral rich operating point. The lambda values are the same as for the conventional regeneration procedure.

The duration of the pulses (their pulse width) is in the order of 2 to 10 seconds and may be the same or different for the rich and the lean pulses. The ratio of the pulse width of the lean pulses to the pulse width of the rich pulses may lie between 5:1 and 1:5. Moreover the pulse widths of the pulses may be decreased stepwise or continuously from the beginning to the end of said second regeneration period.

During the pulsed regeneration a progressive increase of the catalyst temperature is observed which facilitates carbon monoxide and hydrocarbon conversion as well as the release and reduction of the nitrous oxides. A number of 2 to 10 rich/lean-pulses have proved sufficient for complete regeneration of the catalyst.

In fact, it seems that the key factor of the pulsed regeneration is the combination of heating and regeneration. By switching between lean and rich, a steady oxygen supply is maintained that helps to burn the hydrocarbons being deposited on the catalyst during the rich pulses. The increased temperature then speeds up the relevant chemical reactions.

Conventional regeneration is done for a regeneration period of approximately 5 to 20 seconds. This period cannot be prolonged considerably in order to improve regeneration without loosing stability of engine operation and driving comfort. Contrary to that it was found that the pulsed regeneration allows longer regeneration periods without the detrimental effects observed during conventional regeneration.

Having now generally described the invention, the same may be more readily understood through reference to the following figures and examples, which are provided by way of illustration and are not intended to limit the present invention unless specified.
- **Figure 1:**: Shows operation of a nitrogen oxides storage catalyst arranged in the exhaust gas system of a diesel engine using the novel pulsed regeneration strategy according to the invention at low exhaust gas temperatures.
- **Figure 2:**: Shows operation of a nitrogen oxides storage catalyst arranged in the exhaust gas system of a diesel engine using the conventional regeneration strategy at low exhaust gas temperatures.

### EXAMPLES

### Example 1:

The novel pulsed regeneration strategy was applied during the operation of a nitrogen oxides storage catalyst arranged in the exhaust system of a diesel engine.

The diesel engine was a common rail engine and had a power rating of 90 kW and a displacement volume of 2.2 1. The nitrogen oxides storage catalyst consisted of a honeycomb carrier with the catalyst deposited thereon in the form of a coating. The honeycomb carrier had a diameter of 14.38 cm (5.66 inch) and a length of 15.24 cm (6 inch) with a total volume of 2.47 1. The cell density of this carrier was 62 cm⁻² (400 inch⁻²).

The storage catalyst had been applied to this catalyst carrier with a concentration of 280 g per liter of honeycomb carrier. The storage component was barium oxide. The storage catalyst further contained platinum and rhodium in a weight ratio of 10:1 and a combined concentration of 3.88 g/1 (110 g/ft³).

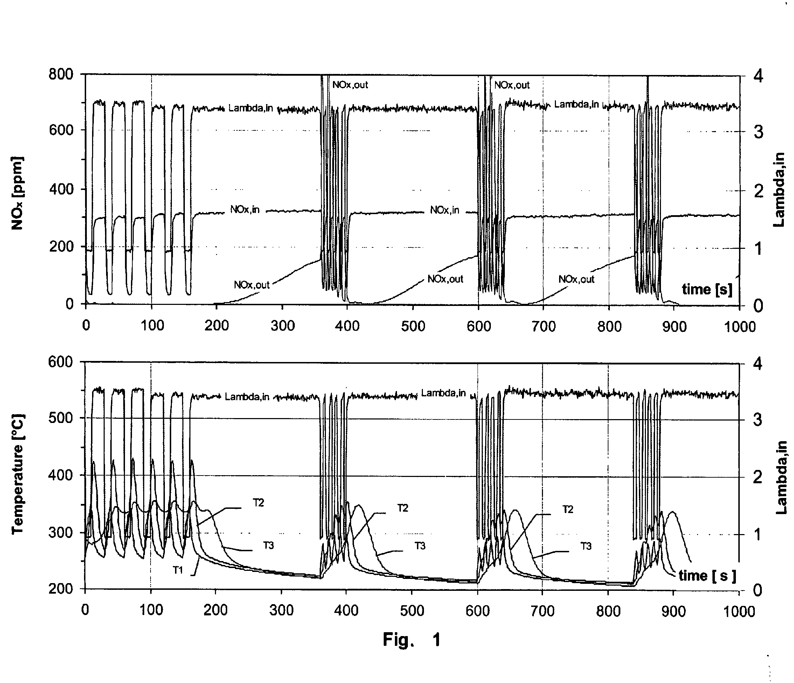

Figure 1 shows measurement scans of various quantities of the exhaust gas and of the catalyst over an operation period of the diesel engine of 1000 seconds. The following quantities were measured online:
- Lambda value before the catalyst (Lambda,in); measured with a lambda sensor
- Nitrogen oxides concentrations in the exhaust gas before (NOx,in) and after the catalyst (NOx,out); measured with a chemo-luminescence detector
- Catalyst temperature measured at entrance of catalyst (T1)
- Catalyst temperature midway of the catalyst (T2)
- Catalyst temperature measured at exit of catalyst (T3).

During the test the engine was operate at a constant rotation speed of 1500 rpm without exhaust gas recirculation. This resulted in a space velocity of the exhaust gas relative to the catalyst of 30,000 h⁻¹. At the start of the test the catalyst was conditioned by operating the diesel engine with 5 rich/lean pulses with a duty cycle of 20/10. The amplitudes of the pulses were switched between 3.3 and 0.9. After that the engine was operated for 200 seconds with a lambda value of approximately 3.3 (storage phase). During this phase nitrogen oxides were stored on the storage catalyst. At the end of this storage phase the catalyst temperature had dropped below 250 °C.

During the storage phase the concentration of nitrogen oxides in the exhaust gas before the catalyst (NOx,in) was approximately 330 ppm. At the beginning of the storage phase no nitrogen oxides were leaving the catalyst (NOx,out) which demonstrates that all nitrogen oxides contained in the exhaust gas were trapped on the storage catalyst. But soon a leakage of nitrogen oxides could be observed which amounted to 180 ppm at the end of the storage phase. Then a pulsed regeneration was initiated comprising 5 rich/lean pulses. After regeneration the nitrogen oxides concentration at the outlet of the catalyst was again zero, indicating complete regeneration of the catalyst. Storage phase and regeneration phase were repeated several times.

From the lower diagram in Figure 1 it can be seen that the pulsed regeneration led to a temperature increase of the catalyst of up to 350 °C.

### Comparison Example 1:

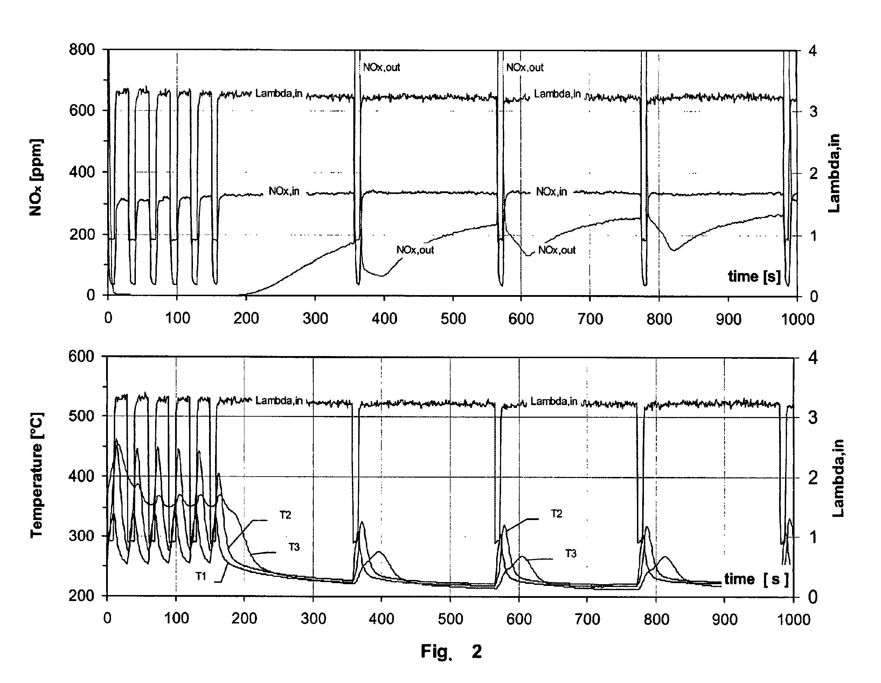

The same test procedure was repeated with conventional regeneration. The regeneration period was set to 8 seconds which was the maximum allowable period with rich air/fuel-ratio for this engine. The respective measurement scans can be seen in Figure 2.

From the upper diagram in Figure 2 it can be seen that from regeneration period to regeneration period the storage catalyst gets less regenerated so that the catalyst adsorbs less nitrogen oxides from the exhaust gas resulting in an increasingly enhanced concentration of nitrogen oxides at the outlet of the catalyst.

While the invention has been described in connection with specific embodiments thereof, it will be understood that it is capable of further modifications and this application is intended to cover any variation, uses, or adaptations of the invention following, in general, the principles of the invention and including such departures from the present disclosure as come within known or customary practice within the art to which the invention pertains and as may be applied to the essential features hereinbefore set forth and as follows in the scope of the appended claims.

## Claims

1. Process for regeneration of a nitrogen oxides storage catalyst arranged in the exhaust gas system of a diesel engine wherein the exhaust gas has an exhaust gas temperature and an air/fuel-ratio, said process comprising a first and a second regeneration strategy wherein the first regeneration strategy is applied when the exhaust gas temperature is above a threshold value and comprises changing the air/fuel ratio from a lean to a rich value during a first regeneration period and wherein the second regeneration strategy is applied when the exhaust gas temperature is below said threshold value and comprises switching the air/fuel-ratio between said lean and said rich air/fuel-ratio back and forth forming a sequence of rich/lean-pulses with a number of 2 to 10 rich/lean pulses during a second regeneration period.

2. Process according to claim 1, wherein the threshold temperature is selected from the interval between 170 and 250 °C.

3. Process according to claim 2, wherein said lean air/fuel-ratio lies between 1.5 and 4 and said rich air/fuel-ratio lies between 0.8 and 0.98.

4. Process according to claim 3, wherein the duration of the first regeneration period is of from 5 to 20 seconds.

5. Process according to claim 4, wherein the pulse width of the lean and the rich pulses are the same or different and lie between 2 and 10 seconds.

6. Process according to claim 5, wherein the ratio of the pulse width of the lean pulses to the pulse width of the rich pulses lies between 5:1 and 1:5.

7. Process according to claim 6, wherein the pulse widths of the pulses is decreased stepwise or continuously from the beginning to the end of said second regeneration period.

8. Process for regeneration of a nitrogen oxides storage catalyst arranged in the exhaust gas system of a diesel engine wherein the exhaust gas of the diesel engine has an exhaust gas temperature and an air/fuel-ratio, and wherein the nitrogen oxides contained in the exhaust gas are adsorbed by the storage catalyst during normal operating conditions of the engine with a lean air/fuel-ratio and the nitrogen oxides are desorbed and converted to harmless substances by lowering the air/fuel-ratio to a rich value during a regeneration period, wherein during the regeneration period the air/fuel-ratio is switched back and forth between said lean and said rich air/fuel-ratio forming a sequence of rich/lean-pulses with a number of 2 to 10 rich/lean pulses.

9. Process according to claim 8, wherein said lean air/fuel-ratio lies between 1.5 and 4 and said rich air/fuel-ratio lies between 0.8 and 0.98.

10. Process according to claim 9, wherein the pulse widths of the lean and the rich pulses are the same or different and lie between 2 and 10 seconds.

11. Process according to claim 10, wherein the ratio of the pulse width of the lean pulses to the pulse width of the rich pulses lies between 5:1 and 1:5.

12. Process according to claim 11, wherein the pulse widths of the pulses is decreased stepwise or continuously from the beginning to the end of said regeneration period.

13. Device for regeneration of a nitrogen oxides storage catalyst arranged in the exhaust gas system of a diesel engine wherein the exhaust gas has an exhaust gas temperature and an air/fuel-ratio, the device being particularly adapted to carry out a process according to any one of the preceding claims, said device comprising:
means for providing/generating a first and a second regeneration strategy,
wherein the first regeneration strategy is applicable when the exhaust gas temperature is above a threshold value and comprises changing the air/fuel ratio from a lean to a rich value during a first regeneration period and
wherein the second regeneration strategy is applicable when the exhaust gas temperature is below said threshold value and
means for switching the air/fuel-ratio between said lean and said rich air/fuel-ratio back and forth forming a sequence of rich/lean-pulses with a number of 2 to 10 rich/lean pulses during a second regeneration period.

## Patentansprüche

1. Verfahren zur Regenerierung eines Stickoxid-Speicherkatalysators, der in der Abgasanlage eines Dieselmotors angeordnet ist, wobei das Abgas eine Abgastemperatur und ein Luft/Kraftstoff-Verhältnis aufweist, wobei das Verfahren eine erste und eine zweite Regenerierungsstrategie aufweist, wobei die erste Regenerierungsstrategie angewandt wird, wenn die Abgastemperatur über einem Schwellwert liegt, und eine Änderung des Luft/Kraftstoff-Verhältnisses von einem mageren zu einem fetten Wert während einer ersten Regenerierungsperiode beinhaltet, und wobei die zweite Regenerierungsstrategie angewandt wird, wenn die Abgastemperatur unter dem Schwellwert liegt, und Schalten zwischen dem mageren und dem fetten Luft/Kraftstoff-Verhältnis hin und her aufweist, der eine Folge von fetten/mageren Impulsen mit einer Anzahl von 2 bis 10 fetten/mageren Impulsen während einer zweiten Regenerierungsperiode bildet.

2. Verfahren nach Anspruch 1, wobei der Temperaturschwellwert aus dem Intervall zwischen 170 und 250°C ausgewählt wird.

3. Verfahren nach Anspruch 2, wobei das magere Luft/Kraftstoff-Verhältnis zwischen 1,5 und 4 liegt und das fette Luft/Kraftstoff-Verhältnis zwischen 0,8 und 0,98 liegt.

4. Verfahren nach Anspruch 3, wobei die Dauer der ersten Regenerierungsperiode 5 bis 20 Sekunden beträgt.

5. Verfahren nach Anspruch 4, wobei die Impulsbreiten der mageren und der fetten Impulse gleich oder verschieden sind und zwischen 2 und 10 Sekunden liegen.

6. Verfahren nach Anspruch 5, wobei das Verhältnis der Impulsbreite der mageren Impulse zur Impulsbreite der fetten Impulse zwischen 5:1 und 1:5 liegt.

7. Verfahren nach Anspruch 6, wobei die Impulsbreiten der Impulse vom Anfang bis zum Ende der zweiten Regenerierungsperiode schrittweise oder kontinuierlich verringert werden.

8. Verfahren zur Regenerierung eines Stickoxid-Speicherkatalysators, der in der Abgasanlage eines Dieselmotors angeordnet ist, wobei das Abgas eine Abgastemperatur und ein Luft/Kraftstoff-Verhältnis aufweist, und wobei die in dem Abgas enthaltenen Stickoxide während normaler Betriebsbedingungen des Motors mit einem mageren Luft/Kraftstoff-Verhältnis durch den Speicherkatalysator adsorbiert werden und die Stickoxide durch Absenken des Luft/Kraftstoff-Verhältnisses auf einen fetten Wert während einer Regenerierungsperiode desorbiert und in unschädliche Substanzen umgewandelt werden, wobei während der Regenerierungsperiode das Luft/Kraftstoff-Verhältnis zwischen dem mageren und dem fetten Luft/Kraftstoff-Verhältnis hin und her geschaltet wird und eine Folge von fetten/mageren Impulsen mit einer Anzahl von 2 bis 10 fetten/mageren Impulsen bildet.

9. Verfahren nach Anspruch 8, wobei das magere Luft/Kraftstoff-Verhältnis zwischen 1,5 und 4 liegt und das fette Luft/Kraftstoff-Verhältnis zwischen 0,8 und 0,98 liegt.

10. Verfahren nach Anspruch 9, wobei die Impulsbreiten der mageren und der fetten Impulse gleich oder verschieden sind und zwischen 2 und 10 Sekunden liegen.

11. Verfahren nach Anspruch 10, wobei das Verhältnis der Impulsbreite der mageren Impulse zur Impulsbreite der fetten Impulse zwischen 5:1 und 1:5 liegt.

12. Verfahren nach Anspruch 11, wobei die Impulsbreiten der Impulse vom Anfang bis zum Ende der Regenerierungsperiode schrittweise oder kontinuierlich verringert werden.

13. Vorrichtung zur Regenerierung eines Stickoxid-Speicherkatalysators, der in der Abgasanlage eines Dieselmotors angeordnet ist, wobei das Abgas eine Abgastemperatur und ein Luft/Kraftstoff-Verhältnis aufweist, wobei die Vorrichtung insbesondere an die Ausführung eines Verfahrens nach einem der vorstehenden Ansprüche angepaßt ist, wobei die Vorrichtung aufweist:
eine Einrichtung zur Bereitstellung/Generierung einer ersten und einer zweiten Regenerierungsstrategie,
wobei die erste Regenerierungsstrategie anwendbar ist, wenn die Abgastemperatur über einem Schwellwert liegt, und eine Änderung des Luft/Kraftstoff-Verhältnisses von einem mageren zu einem fetten Wert während einer ersten Regenerierungsperiode beinhaltet, und
wobei die zweite Regenerierungsstrategie anwendbar ist, wenn die Abgastemperatur unter dem Schwellwert liegt, und
eine Einrichtung zum Hin- und Herschalten des Luft/Kraftstoff-Verhältnisses zwischen dem mageren und dem fetten Luft/Kraftstoff-Verhältnis zur Bildung einer Folge von fetten/mageren Impulsen mit einer Anzahl von 2 bis 10 fetten/mageren Impulsen während einer zweiten Regenerierungsperiode.

## Revendications

1. Procédé permettant la régénération d'un catalyseur d'accumulation des oxydes d'azote monté dans le système des gaz d'échappement d'un moteur Diesel, les gaz d'échappement ayant une température des gaz d'échappement et un rapport air/carburant, ce procédé comprenant une première et une seconde stratégie de régénération, la première stratégie de régénération étant appliquée lorsque la température des gaz d'échappement est située au-dessus d'une valeur de seuil et comprenant l'étape consistant à faire passer le rapport air/carburant d'une valeur pauvre à une valeur riche pendant une première période de régénération et la seconde stratégie de régénération étant appliquée lorsque la température des gaz d'échappement est située au-dessous de la valeur de seuil et comprenant l'étape consistant à commuter en va et vient le rapport air/carburant entre le rapport air/carburant pauvre et le rapport air/carburant riche, de façon à former une succession d'impulsions riche/pauvre avec un nombre de 2 à 10 impulsions riche/pauvre pendant une seconde période de régénération.

2. Procédé conforme à la revendication 1,
selon lequel
la température de seuil est choisie dans la plage comprise entre 170°C et 250°C.

3. Procédé conforme à la revendication 2,
selon lequel
le rapport air/carburant pauvre est situé entre 1,5 et 4 tandis que le rapport air/carburant riche est situé entre 0,8 et 0,98.

4. Procédé conforme à la revendication 3,
selon lequel
la durée de la première période de régénération est comprise entre 5 et 20 secondes.

5. Procédé conforme à la revendication 4,
selon lequel
la largeur d'impulsion des impulsions riches et des impulsions pauvres est la même ou différente et est située entre 2 et 10 secondes.

6. Procédé conforme à la revendication 5,
selon lequel
le rapport de la largeur d'impulsion des impulsions pauvres à la largeur d'impulsion des impulsions riches est situé entre 5:1 et 1:5.

7. Procédé conforme à la revendication 6,
selon lequel
la largeur d'impulsion des impulsions est diminuée pas à pas ou en continu du début à la fin de la seconde période de régénération.

8. Procédé permettant la régénération d'un catalyseur d'accumulation des oxydes d'azote monté dans le système des gaz d'échappement d'un moteur Diesel, selon lequel les gaz d'échappement du moteur Diesel ont une température des gaz d'échappement et un rapport air/carburant, et selon lequel les oxydes d'azote renfermés dans les gaz d'échappement sont adsorbés par le catalyseur d'accumulation au cours des conditions de fonctionnement normales du moteur, avec un rapport air/carburant pauvre, et les oxydes d'azote sont désorbés et transformés en des substances inoffensives en abaissant le rapport air/carburant à une valeur riche pendant une période de régénération, au cours de laquelle le rapport air/carburant est commuté en va-et-vient de façon à former une succession d'impulsions riche/pauvre avec un nombre de 2 à 10 impulsions riche/pauvre.

9. Procédé conforme à la revendication 8,
selon lequel
le rapport air/carburant pauvre est situé entre 1,5 et 4 et le rapport air/carburant riche est situé entre 0,8 et 0,98.

10. Procédé conforme à la revendication 9,
selon lequel
la largeur d'impulsion des impulsions riches et des impulsions pauvres est la même ou différente et est située entre 2 et 10 secondes.

11. Procédé conforme à la revendication 10,
selon lequel
le rapport de la largeur d'impulsion des impulsions pauvres à la largeur d'impulsion des impulsions riches est situé entre 5:1 et 1:5.

12. Procédé conforme à la revendication 11,
selon lequel
la largeur d'impulsion des impulsions est diminuée pas à pas ou en continu du début à la fin de la période de régénération.

13. Dispositif permettant la régénération d'un catalyseur d'accumulation des oxydes d'azote monté dans le système des gaz d'échappement d'un moteur Diesel,
selon lequel
les gaz d'échappement ont une température des gaz d'échappement et un rapport air/carburant, ce dispositif étant plus particulièrement adapté à la mise en oeuvre d'un procédé conforme à l'une quelconque des revendications précédentes, et comprenant :
- des moyens pour se procurer/générer une première et une seconde stratégie de régénération,
- la première stratégie de régénération étant applicable lorsque la température des gaz d'échappement est située au-dessus d'une valeur de seuil et comprenant l'étape consistant à faire passer le rapport air/carburant d'une valeur pauvre à une valeur riche pendant une première période de régénération, et
- la seconde stratégie de régénération étant applicable lorsque la température des gaz d'échappement est située au-dessous de la valeur de seuil, et
- des moyens pour commuter en va-et-vient le rapport air/carburant entre le rapport air/carburant pauvre et le rapport air/carburant riche de façon à former une succession d'impulsions riche/pauvre avec un nombre de 2 à 10 impulsions riche/pauvre pendant une seconde période de régénération.
